# EUROPEAN PATENT APPLICATION

(11) **EP 4 756 571 A1**
(43) Date of publication of application: **10.06.2026**
(21) Application number: 24863224.2
(22) Date of filing: 05.09.2024
(51) Int. Cl.: G06F 1/3206, G06F 1/324, G06F 1/3234

(54) **ELECTRONIC DEVICE FOR PERFORMING POWER CONTROL AND OPERATING METHOD THEREOF**

(30) Priority: 05.09.2023 KR 20230117396; 14.12.2023 KR 20230181733
(71) Applicant: Samsung Electronics Co., Ltd., Suwon-si, Gyeonggi-do 16677 (KR)
(72) Inventor: SHIN, Sungkook, Suwon-si Gyeonggi-do 16677 (KR)
(74) Representative: HGF
(86) International application number: PCT/KR2024/013428
(87) International publication number: WO 2025/053645

(57) **Abstract**

According to an embodiment of the present disclosure, an electronic device (101) comprises: at least one of a graphic processing unit (GPU) (213) and a multimedia block (215); a processor (120, 200, 211); and a memory (130) for storing instructions, wherein the instructions, when executed by the processor, cause the electronic device to: detect a first stall ratio for a processor cycle of the processor; identify whether the first stall ratio exceeds a first threshold value; on the basis of identifying that the first stall ratio exceeds the first threshold value, identify whether a processor stall of the processor satisfies a condition related to a memory access delay for the memory; and on the basis of identifying that the condition is satisfied, adjust a quality of service (QoS)-related value applied to a transaction of the processor to be higher than a QoS-related value applied to a transaction of at least one of the GPU and the multimedia block. Various other embodiments are also possible.

## Description

### [Technical Field]

An embodiment of the disclosure relates to an electronic device for performing power control and an operating method thereof.

### [Background Art]

A performance and a function of an electronic device (e.g., a portable device such as a smartphone) have been continuously improved. On the other hand, the electronic device has been evolved in a form in which a size of the electronic device becomes smaller and a weight becomes lighter for user convenience. Due to the miniaturization and weight reduction of the electronic device, a battery capacity of the electronic device may be limited, and thus, importance of managing current consumption, which may directly affect usage time of the electronic device, has become more prominent.

An application processor (AP) used in the electronic device configures intellectual property (IP) blocks (e.g., a central processing unit (CPU), a graphic processing unit (GPU), a neural processing unit (NPU), a multimedia block, and/or a memory controller) as separate power domains in order to control the current consumption, and applies a dynamic voltage and frequency scaling (DVFS) scheme that dynamically changes an operating voltage and an operating frequency of each power domain according to an operating situation of the electronic device. In order to control the current consumption, based on a normalized CPU performance (e.g., a Dhrystone Million Instructions Per Second (DMIPS)-based CPU performance), the AP also applies a core selection scheme that selects an appropriate CPU according to a change in CPU load (e.g., a sum of load values of executable tasks (or runnable tasks)) according to the operating situation of the electronic device.

The AP may be implemented in a form of a system on chip (SoC), and in an SoC architecture, it is required to support a quality of service (QoS) signal. When performing routing for transactions from IP blocks (e.g., a CPU, a GPU, and/or a multimedia block), an interconnect block may determine a priority for each transaction based on a QoS value and transfer a corresponding transaction to a memory controller based on the determined priority. The memory controller may also determine a scheduling priority based on a QoS value in an operation of accessing memory (e.g., dynamic random access memory (DRAM) via a read/write command.

In a case of the CPU among the IP blocks, although a CPU stall duration occupies most of a CPU cycle, a conventional DVFS scheme does not consider such the CPU stall duration, so the CPU may maintain an unnecessarily high operating frequency even during the CPU stall duration to consume a relatively large current.

The above information may be provided as a related art for the purpose of aiding understanding of the disclosure. No claim or determination has been made as to whether any of the foregoing may be applied as a prior art related to the disclosure.

### [Disclosure]

### [Technical Solution]

According to an embodiment of the disclosure, an electronic device (101) may comprise at least one of a graphic processing unit (GPU)(213) or a multimedia block (215), a processor (120; 200; 211) including processing circuitry, and memory (130) storing instructions.

According to an embodiment of the disclosure, the instructions, when executed by the processor individually or collectively, may cause the electronic device to detect a first stall ratio for a processor cycle of the processor.

According to an embodiment of the disclosure, the instructions, when executed by the processor individually or collectively, may cause the electronic device to identify whether the first stall ratio exceeds a first threshold value.

According to an embodiment of the disclosure, the instructions, when executed by the processor individually or collectively, may cause the electronic device to, based on identifying that the first stall ratio exceeds the first threshold value, identify whether to satisfy a condition that processor stall of the processor is related to a memory access delay to the memory.

According to an embodiment of the disclosure, the instructions, when executed by the processor individually or collectively, may cause the electronic device to, based on identifying that the condition is satisfied, adjust a quality of service (QoS)-related value applied to a transaction of the processor to be higher than a QoS-related value applied to a transaction of the at least one of the GPU or the multimedia block.

According to an embodiment of the disclosure, a method may comprise detecting a first stall ratio for a processor cycle of a processor (120; 200; 211).

According to an embodiment of the disclosure, the method may comprise identifying whether the first stall ratio exceeds a first threshold value.

According to an embodiment of the disclosure, the method may comprise, based on identifying that the first stall ratio exceeds the first threshold value, identifying whether to satisfy a condition that processor stall of the processor is related to a memory access delay to memory (130).

According to an embodiment of the disclosure, the method may comprise, based on identifying that the condition is satisfied, adjusting a quality of service (QoS)-related value applied to a transaction of the processor to be higher than a QoS-related value applied to a transaction of the at least one of a graphic processing unit (GPU)(213) or a multimedia block (215).

According to an embodiment of the disclosure, a medium storing at least one instruction and data readable by a computer may be provided.

According to an embodiment of the disclosure, the at least one instruction or the data, when executed by a processor (120; 200; 211) of an electronic device (101), may cause the electronic device to perform at least one operation.

According to an embodiment of the disclosure, the at least one operation may comprise detecting a first stall ratio for a processor cycle of the processor.

According to an embodiment of the disclosure, the at least one operation may comprise identifying whether the first stall ratio exceeds a first threshold value.

According to an embodiment of the disclosure, the at least one operation may comprise, based on identifying that the first stall ratio exceeds the first threshold value, identifying whether to satisfy a condition that processor stall of the processor is related to a memory access delay to memory (130).

According to an embodiment of the disclosure, the at least one operation may comprise, based on identifying that the processor stall is due to the memory access delay, adjusting a quality of service (QoS)-related value applied to a transaction of the processor to be higher than a QoS-related value applied to a transaction of the at least one of a graphic processing unit (GPU)(213) or a multimedia block (215).

### [Description of Drawings]

FIG. 1 is a block diagram schematically illustrating an electronic device within a network environment according to an embodiment.
FIG. 2 is a block diagram schematically illustrating an AP according to an embodiment.
FIG. 3 is a block diagram schematically illustrating a CPU according to an embodiment.
FIG. 4 is a block diagram schematically illustrating a software architecture of an AP according to an embodiment.
FIG. 5 is a flowchart illustrating an operating process of an electronic device according to an embodiment.
FIG. 6 is a diagram for describing a scheme of determining a stall ratio of a CPU cycle and whether it is a processor stall generated due to memory access delay, according to an embodiment.
FIG. 7 is a flowchart illustrating an operating process of an electronic device according to an embodiment.
FIG. 8 is a diagram for describing a change in an operation mode based on a stall ratio of a CPU cycle, according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described in an embodiment of the disclosure, but the electronic device may be referred to as a terminal, a mobile station, a mobile equipment (ME), a user equipment (UE), a user terminal (UT), a subscriber station (SS), a wireless device, a handheld device, or an access terminal (AT). Alternatively, in an embodiment of the disclosure, the electronic device may be a device having a communication function such as, for example, a mobile phone, a personal digital assistant (PDA), a smart phone, a wireless MODEM, or a notebook.

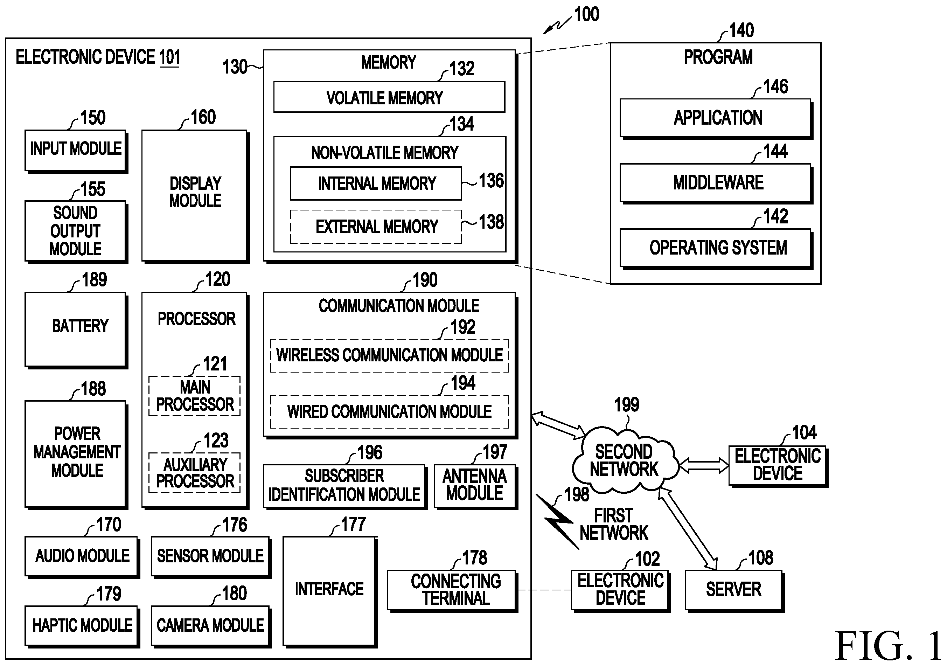

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for an embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

An application processor (AP) used in the electronic device may configure intellectual property (IP) blocks (e.g., a central processing unit (CPU), a graphic processing unit (GPU), a neural processing unit (NPU), a multimedia block, and/or a memory controller) as separate power domains in order to control the current consumption, and apply a dynamic voltage and frequency scaling (DVFS) scheme that dynamically changes an operating voltage and an operating frequency of each power domain according to an operating situation of the electronic device. In order to control the current consumption, based on a normalized CPU performance (e.g., a Dhrystone Million Instructions Per Second (DMIPS)-based CPU performance), the AP may also apply a core selection scheme that selects an appropriate core according to a change in CPU load (e.g., a sum of load values of executable tasks (or runnable tasks)) according to the operating situation of the electronic device. For example, if the core selection scheme is used, for an application with a relatively large load such as a game, the AP may select a core having a relatively high performance to enable a high-speed operation in order to provide an optimal user experience (UX), even if current consumption increases relatively significantly. In contrast, for an application with a relatively small load such as a video sharing service, the AP may select a core which is advantageous in terms of efficiency rather than a performance to control the current consumption by decreasing an operating voltage and decreasing an operating frequency.

Generally, in a system on chip (SoC) architecture, it is required to support a quality of service (QoS) signal. When performing routing for transactions from IP blocks (e.g., a CPU, a GPU, and/or a multimedia block, etc.), an interconnect block may determine a priority for each transaction based on a QoS value (hereinafter, for convenience of a description, the QoS value may also be referred to as a "QoS-related value") and transfer a corresponding transaction to a memory controller based on the determined priority. A transaction may represent a basic unit of reading/writing which each IP block transmits to and receives from an interconnect. For example, the transaction may be transferred to the memory controller based on a priority determined based on the QoS value. For example, a QoS value applied to a transaction may include a priority used for transferring the transaction to at least one additional circuit (e.g., an interconnect block, and/or a memory (e.g., DRAM, SRAM, or Compute Express Link (CXL) memory, etc.) controller) related to accessing memory. For example, transactions having the same QoS value may be sequentially transferred to the memory controller, and conversely, a transaction having a large QoS value (e.g., a high priority) may be transferred to the memory controller with priority over a transaction having a small QoS value (e.g., a low priority).

The memory controller may also determine a scheduling priority based on a QoS value in an operation of accessing memory (e.g., dynamic random access memory (DRAM) via a read/write command.

In an actual operation scenario, a situation may occur in which most of a CPU cycle is occupied by a frontend stall or a backend stall, thereby sharply decreasing the number of instructions performed per cycle (or instructions per cycle (IPC)) of a CPU. A CPU stall may represent a situation in which a delay occurs in a CPU operation, and may include a CPU bound stall, a memory bound stall, a frontend stall, and/or a backend stall.

The CPU bound stall may represent a stall which occurs in a CPU internal execution engine which processes an instruction.

The memory bound stall may represent a stall which occurs in an accessing operation to memory including a CPU internal cache and DRAM. The memory bound stall may include an L1 instruction cache miss which may result in the frontend stall, and an L1 data cache miss which may result in the backend stall.

The frontend stall may represent a stall which occurs in an operation for the CPU to read an instruction to be performed. The frontend stall may occur due to the L1 instruction cache miss, but may not limited to this. The frontend stall may include a case that a cache miss occurs in an operation of fetching an instruction or a delay occurs due to a CPU pipeline flush operation caused by a branch misprediction.

The backend stall may represent a stall which occurs in an operation for the CPU to process a read/write instruction. The backend stall may occur due to the L1 data cache miss, but may not be limited thereto. The backend stall may include a case in which an access to DRAM, which is an external resource, is required due to a cache miss occurring during a data read/write operation. The IPC may also be referred to as the number of instructions performed per cycle (or instructions per cycle), may be the average number of instructions executed for each clock cycle, and may be an aspect of a performance of a processor.

If a size of a translation lookaside buffer (TLB) is smaller than a working set size (WSS) of an application executed on the AP, or if a cache/TLB miss rate is maintained at or above a threshold value for set time due to inaccurate prediction by a prefetcher, when the CPU accesses the DRAM, a reception of a response required to be received by the CPU may be delayed due to contention between transactions by other IPs occurring in the interconnect block and a transaction by the CPU, or due to a shortage of an operating bandwidth itself. The prefetcher may perform a prefetching operation to prevent a memory access delay. The prefetching operation may monitor a memory access pattern of an executing application, predict what data the executing application will access next, and fetch the predicted data in advance.

However, in the DVFS scheme which only considers workload according to an operating situation based on a normalized CPU performance (e.g., a DMIPS-based CPU performance) for current consumption control, a CPU stall (e.g., frontend stall, backend stall) situation is not considered for dynamic control of an operating frequency and an operating voltage, and therefore, the CPU may operate inefficiently by maintaining an unnecessarily high operating frequency and consuming unnecessarily large current during a CPU stall period when the CPU fetches data from the DRAM via the interconnect block. To prevent such inefficient operation, it may be attempted to apply a scheme of increasing an operating frequency and an operating voltage of the interconnect block and the DRAM, however, if the AP is already consuming maximum power, it may be difficult to apply the scheme of increasing the operating frequency and the operating voltage of the interconnect block and the DRAM, and thus, it may be difficult to prevent unnecessary current consumption of the CPU.

An embodiment of the disclosure may provide an electronic device for performing power control and an operating method thereof.

An embodiment of the disclosure may provide an electronic device for performing power control based on CPU stall information and an operating method thereof.

An embodiment of the disclosure may provide an electronic device for adjusting a QoS for a CPU transaction or controlling an operating frequency and an operating voltage and an operating method thereof.

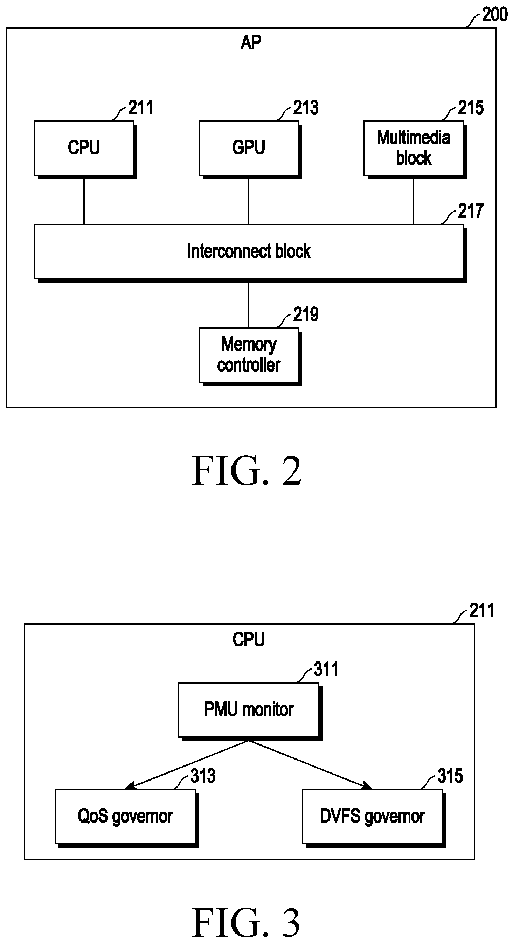

FIG. 2 is a block diagram schematically illustrating an AP according to an embodiment.

Referring to FIG. 2, an AP 200 may include a CPU 211, a GPU 213, a multimedia block 215, an interconnect block 217, and/or a memory (e.g., DRAM, SRAM, Compute Express Link (CXL) memory, etc.) controller 219. The AP 200 may correspond to a processor 120 in FIG. 1. In FIG. 2, the AP 200 is illustrated as including the CPU 211, the GPU 213, the multimedia block 215, the interconnect block 217, and/or the memory controller 219, but is not limited thereto, and the AP 200 may include additional various IP blocks such as an NPU. In an embodiment, the CPU 211 may be a processor. According to an embodiment, the AP 200 may be implemented in a form of an SoC. According to an embodiment, the CPU 211 may collect and analyze information provided from a performance monitoring unit (PMU) (e.g., events provided from the PMU). The CPU 211 may collect and analyze the information provided from the PMU at a set period (e.g., one second). The set period used for collecting and analyzing the information provided from the PMU may vary depending on a situation. The information provided from the PMU will be described in detail in FIG. 3 below, so a detailed description thereof will be omitted herein.

According to an embodiment, the CPU 211 may control a QoS value for a transaction from the CPU 211 and/or other IP blocks (e.g., the GPU 213 and/or the multimedia block 215). The CPU 211 may control a DVFS operation. According to an embodiment, the CPU 211 may control (or adjust) an operating voltage and/or an operating frequency for other IP blocks (e.g., the GPU 213, the multimedia block 215, the interconnect block 217, and/or the memory controller 219).

According to an embodiment, the CPU 211 may detect a stall ratio (stall_ratio) of a CPU cycle based on the information provided from the PMU. In an embodiment, the stall ratio of the CPU cycle may represent a ratio occupied by a CPU stall occurrence interval to the CPU cycle. According to an embodiment, the stall ratio of the CPU cycle may be detected based on the information provided from the PMU for set time (e.g., 1 second). In an embodiment, the set time may represent optimal time required to detect an operating situation of the CPU 211 to perform appropriate power control. In an embodiment, the set time may be a period corresponding to one CPU cycle, or set time corresponding to a plurality of CPU cycles, and the set time for detecting the stall ratio of the CPU cycle may vary depending on a situation.

In an embodiment, the CPU 211 may identify whether the stall ratio of the CPU cycle exceeds a first threshold value (e.g., a first threshold stall ratio (stall_ratio_rise)) which is preset. If the stall ratio of the CPU cycle exceeds the first threshold value, the CPU 211 may identify whether the CPU stall is a memory bound stall or a CPU bound stall. In an embodiment, the memory bound stall may be a stall which occurs due to a memory access delay (e.g., an access delay to external memory of the CPU 211, such as DRAM).

If the CPU stall is the CPU bound stall, the CPU 211 may adjust (for example, increase) the operating voltage and the operating frequency of the CPU 211 based on the DVFS scheme when power budget room is greater than or equal to a set threshold value (e.g., a third threshold value) to escape from a CPU stall situation. If the CPU stall is the memory bound stall, the CPU 211 may increase a QoS value applied to transactions of the CPU 211 by a set value (e.g., 1). In an embodiment, it will be described assuming that a larger QoS value for a transaction is a higher priority, however, alternatively, a smaller QoS value for a transaction may be a higher priority. Hereinafter, for convenience of a description, the QoS value may also be referred to as a "QoS-related value." For example, a transaction may be transferred to the memory controller 219 based on a priority determined based on the QoS value. For example, the QoS value applied to the transaction may include a priority used for transferring the transaction to at least one additional circuit (e.g., the interconnect block 217 and/or the memory (e.g., DRAM, SRAM, Compute Express Link (CXL) memory, etc.) controller 219) related to accessing memory. For example, transactions having the same QoS value may be transferred to the memory controller 219 sequentially, or alternatively, a transaction having a large QoS value (e.g., a high priority) may be transferred to the memory controller 219 with priority over a transaction having a small QoS value (e.g., a low priority). In an embodiment, the QoS value may include a priority used when the interconnect block 217 processes transactions requested by IP blocks (e.g., the CPU 211, the GPU 213, and/or the multimedia block 215). Each of the IP blocks (e.g., the CPU 211, the GPU 213, and/or the multimedia block 215) may allocate a QoS value for a corresponding transaction when generating corresponding transaction, and the interconnect block 217 may differentiate a processing order based on a QoS value allocated to a transaction generated in each of the IP blocks (e.g., the CPU 211, the GPU 213, and/or the multimedia block 215). For example, the interconnect block 217 may sequentially process transactions having the same QoS value, while processing a transaction having a high QoS value with priority over a transaction with a low QoS value. For example, the QoS value may be used as a priority indicator for an associated read/write transaction, and a higher value may indicate a higher priority transaction (QoS value is used as a priority indicator for the associated write or read transaction. A higher value indicates a higher priority transaction).

The CPU 211, which increases the QoS value applied to the transactions of the CPU 211 by the set value, may detect a stall ratio of a CPU cycle. The CPU 211 may identify whether the stall ratio of the CPU cycle detected after increasing the QoS value by the set value is less than a preset second threshold value (e.g., a second threshold stall ratio (stall_ratio_fall)). If the stall ratio of the CPU cycle is less than the second threshold value, the CPU 211 may restore the QoS value applied to the transactions of the CPU 211 to an original value (e.g., a value reduced by the set value). If the stall ratio of the CPU cycle detected after increasing the QoS value by the set value is equal to or greater than the second threshold value or the first threshold value, the CPU 211 may identify whether power budget room is equal to or greater than a third threshold value. In an embodiment, if the power budget room is equal to or greater than the third threshold value, it may indicate that available power is relatively sufficient.

If the power budget room is equal to or greater than the third threshold value, the CPU 211 may adjust an operating voltage and an operating frequency of each of the interconnect block 217 and the memory controller 219. According to an embodiment, the CPU 211 may increase the operating voltage of each of the interconnect block 217 and the memory controller 219 by set voltage, and may increase the operating frequency of each of the interconnect block 217 and the memory controller 219 by a set frequency. If the power budget room is equal to or greater than the third threshold value, the CPU 211 may maintain the operating voltage and the operating frequency of the CPU 211. Like this, the CPU 211 may detect the stall ratio of the CPU cycle after adjusting the operating voltage and the operating frequency of each of the interconnect block 217 and the memory controller 219. The CPU 211 may identify whether the stall ratio of the CPU cycle detected after adjusting the operating voltage and the operating frequency of each of the interconnect block 217 and the memory controller 219 is less than the second threshold value or the first threshold value. If the stall ratio of the CPU cycle detected after adjusting the operating voltage and the operating frequency of each of the interconnect block 217 and the memory controller 219 is less than the preset second threshold value, the CPU 211 may restore the QoS value applied to the transactions of the CPU 211 to the original value (e.g., the value reduced by the set value). If the stall ratio of the CPU cycle detected after adjusting the operating voltage and the operating frequency of each of the interconnect block 217 and the memory controller 219 is less than the preset second threshold value, the CPU 211 may restore the operating voltage and the operating frequency of each of the interconnect block 217 and the memory controller 219 to an original operating voltage and an original operating frequency. In an embodiment, if the stall ratio of the CPU cycle detected after adjusting the operating voltage and the operating frequency of each of the interconnect block 217 and the memory controller 219 is less than the preset second threshold value, the CPU 211 may decrease the operating voltage of each of the interconnect block 217 and the memory controller 219 by set voltage, and decrease the operating frequency of each of the interconnect block 217 and the memory controller 219 by a set frequency.

If the power budget room is less than the third threshold value, the CPU 211 may adjust an operating voltage and an operating frequency of each of the CPU 211, the interconnect block 217, and the memory controller 219. According to an embodiment, the CPU 211 may decrease the operating voltage of the CPU 211 by set voltage and decrease the operating frequency of the CPU 211 by a set frequency, and at the same time, increase the operating voltage of each of the interconnect block 217 and the memory controller 219 by set voltage and increase the operating frequency of each of the interconnect block 217 and the memory controller 219 by a set frequency. Like this, if the power budget room is less than the third threshold value (for example, if power budget is insufficient), the CPU 211 may escape from the CPU stall situation as quickly as possible by decreasing the operating frequency and the operating voltage of the CPU 211, which maintains a high operating frequency, even though it may not process an instruction quickly since most of the CPU cycle are occupied by a CPU stall due to an memory access, and using power budget saved according to this to increase the operating frequency and the operating voltage of the interconnect block 217 and the memory controller 219.

In this way, the CPU 211 may detect a stall ratio of a CPU cycle after adjusting the operating voltage and the operating frequency of each of the CPU 211, the interconnect block 217, and the memory controller 219. The CPU 211 may identify whether the stall ratio of the CPU cycle detected after adjusting the operating voltage and the operating frequency of each of the CPU 211, the interconnect block 217, and the memory controller 219 is less than the second threshold value. If the stall ratio of the CPU cycle detected after adjusting the operating voltage and the operating frequency of each of the CPU 211, the interconnect block 217, and the memory controller 219 is less than the preset second threshold value, the QoS value applied to the transactions of the CPU 211 may be restored to the original value (e.g., the value reduced by the set value). If the stall ratio of the CPU cycle detected after adjusting the operating voltage and the operating frequency of each of the CPU 211, the interconnect block 217, and the memory controller 219 is less than the preset second threshold value, the CPU 211 may restore the operating voltage and the operating frequency of each of the interconnect block 217 and the memory controller 219 to the original operating voltage and the original operating frequency. In an embodiment, if the stall ratio of the CPU cycle detected after adjusting the operating voltage and the operating frequency of each of the CPU 211, the interconnect block 217, and the memory controller 219 is less than the preset second threshold value, the CPU 211 may decrease the operating voltage of each of the interconnect block 217 and the memory controller 219 by set voltage, and may decrease the operating frequency of each of the interconnect block 217 and the memory controller 219 by a set frequency. If the stall ratio of the CPU cycle detected after adjusting the operating voltage and the operating frequency of each of the CPU 211, the interconnect block 217, and the memory controller 219 is less than the preset second threshold value, the CPU 211 may restore the operating voltage and the operating frequency of the CPU 211 to the original operating voltage and the original operating frequency. In an embodiment, the CPU 211 may increase the operating voltage of the CPU 211 by the set voltage and increase the operating frequency of the CPU 211 by the set frequency.

FIG. 3 is a block diagram schematically illustrating a CPU according to an embodiment.

Referring to FIG. 3, a CPU 211 (e.g., a CPU 211 in FIG. 2) may be included in an AP (e.g., a processor 120 in FIG. 1 or an AP 200 in FIG. 2). The CPU 211 may include a PMU monitor 311, a QoS governor 313, and/or a DVFS governor 315. While FIG. 3 illustrates a case in which the PMU monitor 311, the QoS governor 313, and/or the DVFS governor 315 are implemented as separate blocks as an example, at least two of the PMU monitor 311, the QoS governor 313, and/or the DVFS governor 315 may be integrated into one block.

According to an embodiment, the PMU monitor 311 may collect and analyze information provided from a PMU. According to an embodiment, the PMU monitor 311 may collect and analyze the information provided from the PMU to determine (for example, calculate) metrics as in Table 1 below.

**<Table 2>**

| JPC | INST_RETIRED/CPU_CYCLES |
|---|---|
| Stall Ratio | STALL/CPU_CYCLES |
| | STALL_FRONTEND/CPU_CYCLES |
| | STALL_BACKED/CPU_CYCLES |
| Cache Miss Rate | L1I_CACHE_REFILL/L1I_CACHE |
| | L1D_CACHE_REFILL/L1D_CACHE |
| | L2D_CACHE_REFILL/L2D_CACHE |
| | L3D_CACHE_REFILL/L3D_CACHE |
| TLB Miss Rate | LIT_TLB_REFLL/LIT_TLR |
| | L1D_TLB_REFILL/L1D_TLB |
| | L2D_TLB_REFILL/L2D_TLB |
| Branch Misprediction Rate | BR_MIS_PRED_RETIRED/BR_RETIRED |

In Table 1, IPC may represent IPC of the CPU 211. For example, the IPC may be determined as INST_RETIRED/CPU_CYCLES.

In Table 1, Stall Ratio may represent a stall ratio of the CPU 211 and may be determined as any one of STALL/CPU_CYCLES, STALL_FRONTEND/CPU_CYCLES, and/or STALL_BACKED/CPU_CYCLES.

In Table 1, Cache Miss Rate may represent a ratio of the number of cache accesses in which a miss occurs to the total number of cache accesses of the CPU 211, and may be determined as any one of L1I_CACHE_REFILL/L1I_CACHE, L1D_CACHE_REFILL/L1D_CACHE, L2D_CACHE_REFILL/L2D_CACHE, and/or L3D_CACHE_REFILL/L3D_CACHE.

In Table 1, TLB Miss Rate may represent a ratio of the number of TLB accesses in which a miss occurs to the total number of TLB accesses, and may be determined as any one of L1I_TLB_REFLL/L1I_TLB, L1D_TLB_REFILL/L1D_TLB, and/or L2D_TLB_REFILL/L2D_TLB.

In Table 1, Branch Misprediction Rate may represent a ratio of branch instructions which are performed with incorrect prediction to all branch instructions performed by the CPU 211, and may be determined as BR_MIS_PRED_RETIRED/BR_RETIRED.

The QoS governor 313 may control a QoS value for a transaction from the CPU 211, the GPU 213, and/or the multimedia block 215. The DVSF governor 313 may control a DVFS operation. According to an embodiment, the DVSF governor 313 may control (or adjust) an operating voltage and/or an operating frequency for the CPU 211 and other IP blocks (e.g., a GPU (e.g., a GPU 213), a multimedia block (e.g., a multimedia block 215), an interconnect block (e.g., an interconnect block 217), and/or a memory controller (e.g., a memory controller 219).

According to an embodiment, the PMU monitor 311 may detect a stall ratio of a CPU cycle based on information collected from the PMU, and transfer, to the QoS governor 313, a command for controlling the QoS value for the transaction from the CPU 211, the GPU 213, and/or the multimedia block 215. In an embodiment, the stall ratio of the CPU cycle may represent a ratio occupied by a CPU stall interval to the CPU cycle. In Table 1, Stall Ratio may correspond to a stall ratio of a cycle. According to an embodiment, the stall ratio of the CPU cycle may be detected based on the information provided from the PMU for set time (e.g., 1 second). In an embodiment, the set time may represent optimal time required to detect a CPU operating situation and perform appropriate power control, and the set time for detecting the stall ratio of the CPU cycle may vary depending on the situation.

In an embodiment, the PMU monitor 311 may identify whether the stall ratio of the CPU cycle exceeds a first threshold value (e.g., a first threshold stall ratio (stall_ratio_rise)) which is preset. If the stall ratio of the CPU cycle exceeds the first threshold value, the PMU monitor 311 may identify whether the CPU stall is a CPU stall which occurs due to a memory access delay (e.g., DRAM access delay). In an embodiment, the CPU stall which occurs due to the memory access delay may be a memory bound stall. In an embodiment, the memory bound stall may be a stall which occurs due to the memory access delay (e.g., an access delay to external memory of a processor (e.g., the CPU 211), such as DRAM). If the CPU stall is not the CPU stall which occurs due to the memory access delay, the PMU monitor 311 may identify whether the CPU stall is a CPU bound stall.

If the CPU stall is the stall which occurs due to the memory (e.g., DRAM, SRAM, Compute Express Link (CXL) memory, etc.) access delay, the PMU monitor 311 may transfer a command to the QoS governor 313 to increase a QoS value applied to transactions of the CPU 211 by a set value (e.g., 1). In an embodiment, it will be described assuming that a larger QoS value for a transaction is a higher priority, however, alternatively, a smaller QoS value for a transaction may be a higher priority.

After increasing the QoS value applied to the transactions of the CPU 211 by the set value, the PMU monitor 311 may detect a stall ratio of a CPU cycle, and transfer, based on this, a command to the QoS governor 313 and the DVFS governor 315. The PMU monitor 311 may transfer the command to the QoS governor 313 to identify whether the stall ratio of the CPU cycle detected after increasing the QoS value by the set value is less than a preset second threshold value (e.g., a second threshold stall ratio (stall_ratio_fall)). If the stall ratio of the CPU cycle is less than the second threshold value, the PMU monitor 311 may transfer the command to the QoS governor 313 to restore the QoS value applied to the transactions of the CPU 211 to an original value (e.g., a value reduced by the set value). If the stall ratio of the CPU cycle detected after increasing the QoS value by the set value is equal to or greater than the second threshold value or the first threshold value, PMU monitor 311 may identify whether power budget room is equal to or greater than a third threshold value. In an embodiment, if the power budget room is equal to or greater than the third threshold value, it may indicate that available power is relatively sufficient.

If the power budget room is equal to or greater than the third threshold value, the PMU monitor 311 may transfer the command to the DVFS governor 315 to adjust an operating voltage and an operating frequency of each of the interconnect block and the memory controller. According to an embodiment, the PMU monitor 311 may transfer the command to the DVFS governor 315 to increase the operating voltage of each of the interconnect block and the memory controller by set voltage, and may increase the operating frequency of each of the interconnect block and the memory controller by a set frequency. If the power budget room is equal to or greater than the third threshold value, the CPU 211 may maintain the operating voltage and the operating frequency of the CPU 211 without transferring a separate command to the DVFS governor 315. Like this, the PMU monitor 311 may detect the stall ratio of the CPU cycle after transferring the command to the DVFS governor 315 to adjust the operating voltage and the operating frequency of each of the interconnect block and the memory controller, and transfer a command to the QoS governor 313 and the DVFS governor 315. The PMU monitor 311 may transfer the command to the DVFS governor 315 to identify whether the stall ratio of the CPU cycle detected after adjusting the operating voltage and the operating frequency of each of the interconnect block and the memory controller is less than the second threshold value. If the stall ratio of the CPU cycle detected after transferring the command to the DVFS governor 315 to adjust the operating voltage and the operating frequency of each of the interconnect block and the memory controller is less than the preset second threshold value, the PMU monitor 311 may transfer the command to the QoS governor 313 to restore the QoS value applied to the transactions of the CPU 211 to the original value (e.g., the value reduced by the set value). If the stall ratio of the CPU cycle detected after adjusting the operating voltage and the operating frequency of each of the interconnect block and the memory controller is less than the preset second threshold value, the PMU monitor 311 may transfer the command to the DVFS governor 315 to restore the operating voltage and the operating frequency of each of the interconnect block and the memory controller to an original operating voltage and an original operating frequency. In an embodiment, if the stall ratio of the CPU cycle detected after adjusting the operating voltage and the operating frequency of each of the interconnect block and the memory controller is less than the preset second threshold value, the PMU monitor 311 may transfer the command to the DVFS governor 315 to decrease the operating voltage of each of the interconnect block and the memory controller by set voltage, and decrease the operating frequency of each of the interconnect block and the memory controller by a set frequency.

If the power budget room is less than the third threshold value, the PMU monitor 311 may transfer the command to the DVFS governor 315 to adjust an operating voltage and an operating frequency of each of the CPU 211, the interconnect block, and the memory controller. According to an embodiment, the PMU monitor 311 may transfer the command to the DVFS governor 315 to decrease the operating voltage of the CPU 211 by set voltage and decrease the operating frequency of the CPU 211 by a set frequency, and at the same time, increase the operating voltage of each of the interconnect block and the memory controller by set voltage and increase the operating frequency of each of the interconnect block and the memory controller by a set frequency.

In this way, after the DVFS governor 315 adjusts the operating voltage and the operating frequency of each of the CPU 211, the interconnect block, and the memory controller, the PMU monitor 311 may detect a stall ratio of a CPU cycle, and transfer, based on this, a command to the QoS governor 313 and the DVFS governor 315. The PMU monitor 311 may transfer the command to the DVFS governor 315 to identify whether the stall ratio of the CPU cycle detected after adjusting the operating voltage and the operating frequency of each of the CPU 211, the interconnect block, and the memory controller is less than the second threshold value. If the stall ratio of the CPU cycle detected after transferring the command to the DVFS governor 315 to adjust the operating voltage and the operating frequency of each of the CPU 211, the interconnect block, and the memory controller is less than the preset second threshold value, the PMU monitor 311 may transfer the command to the QoS governor 313 to restore the QoS value applied to the transactions of the CPU 211 to the original value (e.g., the value reduced by the set value).

According to an embodiment, if the stall ratio of the CPU cycle detected after adjusting the operating voltage and the operating frequency of each of the CPU 211, the interconnect block, and the memory controller is less than the preset second threshold value, the PMU monitor 311 may transfer the command to the DVFS governor 315 to restore the operating voltage and the operating frequency of each of the interconnect block and the memory controller to the original operating voltage and the original operating frequency. In an embodiment, if the stall ratio of the CPU cycle detected after adjusting the operating voltage and the operating frequency of each of the CPU 211, the interconnect block, and the memory controller is less than the preset second threshold value, the PMU monitor 311 may transfer the command to the DVFS governor 315 to decrease the operating voltage of each of the interconnect block and the memory controller by set voltage, and may decrease the operating frequency of each of the interconnect block and the memory controller by a set frequency. If the stall ratio of the CPU cycle detected after adjusting the operating voltage and the operating frequency of each of the CPU 211, the interconnect block, and the memory controller is less than the preset second threshold value, the PMU monitor 311 may transfer the command to the DVFS governor 315 to restore the operating voltage and the operating frequency of the CPU 211 to the original operating voltage and the original operating frequency. In an embodiment, the PMU monitor 311 may transfer the command to the DVFS governor 315 to increase the operating voltage of the CPU 211 by the set voltage and increase the operating frequency of the CPU 211 by the set frequency.

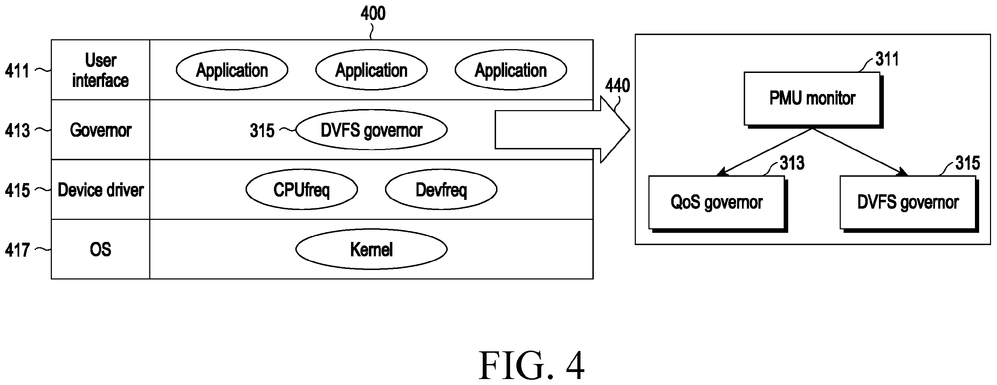

FIG. 4 is a block diagram schematically illustrating a software architecture of an AP according to an embodiment.

Referring to FIG. 4, an AP (e.g., an AP 200 in FIG. 2) may be implemented as a software architecture, and a software architecture 400 of the AP may include a user interface layer 411, a governor layer 413, a device driver layer 415, and/or an operating system (OS) layer 417.

According to an embodiment, the user interface layer 411 may include a plurality of applications.

According to an embodiment, the governor layer 413 may include a PMU monitor (e.g., a PMU monitor 311 in FIG. 3), a QoS governor (e.g., a QoS governor 313 in FIG. 3), and/or a DVFS governor (e.g., a DVFS governor 315 in FIG. 3). The PMU monitor, the QoS governor, and/or the DVFS governor may be implemented to be similar to or substantially the same as those described in FIG. 3, so a detailed description thereof will be omitted herein.

According to an embodiment, the device driver layer 415 may include a CPU frequency driver (CPUfreq) and/or a device frequency driver (Devfreq).

According to an embodiment, the OS layer 417 may include a Kernel.

According to an embodiment of the disclosure, an electronic device (101) may comprise at least one of a graphic processing unit (GPU)(213) or a multimedia block (215), a processor (120; 200; 211) including processing circuitry, and memory (130) storing instructions.

According to an embodiment of the disclosure, the instructions, when executed by the processor individually or collectively, may cause the electronic device to detect a first stall ratio for a processor cycle of the processor.

According to an embodiment of the disclosure, the instructions, when executed by the processor individually or collectively, may cause the electronic device to identify whether the first stall ratio exceeds a first threshold value.

According to an embodiment of the disclosure, the instructions, when executed by the processor individually or collectively, may cause the electronic device to, based on identifying that the first stall ratio exceeds the first threshold value, identify whether to satisfy a condition that processor stall of the processor is related to a memory access delay to the memory.

According to an embodiment of the disclosure, the instructions, when executed by the processor individually or collectively, may cause the electronic device to, based on identifying that the condition is satisfied, adjust a quality of service (QoS)-related value applied to a transaction of the processor to be higher than a QoS-related value applied to a transaction of the at least one of the GPU or the multimedia block.

According to an embodiment of the disclosure, the condition may include at least one of a condition that a cache miss occurs while the processor performs an operation to fetch an instruction from a cache, a condition that an access to the memory is required due to a cache miss that occurs while the processor performs a reading/writing operation on the cache, or a condition that a miss rate of the cache exceeds a threshold miss rate.

According to an embodiment of the disclosure, the electronic device may comprise at least one additional circuit (217; 219) related to accessing the memory.

According to an embodiment of the disclosure, the instructions, when executed by the processor individually or collectively, may cause the electronic device to detect a second stall ratio for the processor cycle after adjusting the QoS-related value applied to the transaction of the processor.

According to an embodiment of the disclosure, the instructions, when executed by the processor individually or collectively, may cause the electronic device to identify whether the second stall ratio is less than a second threshold value.

According to an embodiment of the disclosure, the instructions, when executed by the processor individually or collectively, may cause the electronic device to, based on identifying that the second stall ratio is greater than or equal to the second threshold value, identify whether power budget room is greater than or equal to a third threshold value.

According to an embodiment of the disclosure, the instructions, when executed by the processor individually or collectively, may cause the electronic device to, based on identifying that the power budget room is greater than or equal to the third threshold value, increase an operating voltage and an operating frequency of the at least one additional circuit.

According to an embodiment of the disclosure, the instructions, when executed by the processor individually or collectively, may cause the electronic device to increase the operating voltage of the at least one additional circuit by a set voltage, and increase the operating frequency of the at least one additional circuit by a set frequency.

According to an embodiment of the disclosure, the instructions, when executed by the processor individually or collectively, may cause the electronic device to, based on identifying that the power budget room is less than the third threshold value, decrease an operating voltage and an operating frequency of the at least one processor.

According to an embodiment of the disclosure, the instructions, when executed by the processor individually or collectively, may cause the electronic device to increase the operating voltage and the operating frequency of the at least one additional circuit.

According to an embodiment of the disclosure, the instructions, when executed by the processor individually or collectively, may cause the electronic device to detect a third stall ratio for the processor cycle after increasing the operating voltage and the operating frequency of the at least one additional circuit.

According to an embodiment of the disclosure, the instructions, when executed by the processor individually or collectively, may cause the electronic device to identify whether the third stall ratio is less than the second threshold value.

According to an embodiment of the disclosure, the instructions, when executed by the processor individually or collectively, may cause the electronic device to, based on identifying that the third stall ratio is less than the second threshold, perform at least one of a first operation of restoring the adjusted QoS-related value applied to the transaction of the processor to the QoS-related value before the adjustment, or a second operation of restoring the operating voltage and the operating frequency of the processor to the operating voltage and the operating frequency before the decrease or restoring the operating voltage and the operating frequency of the at least one additional circuit to the operating voltage and the operating frequency before the increase.

According to an embodiment of the disclosure, the instructions, when executed by the processor individually or collectively, may cause the electronic device to operate based on a dynamic voltage and frequency scaling (DVFS) scheme after performing the at least one of the first operation or the second operation.

According to an embodiment of the disclosure, the instructions, when executed by the processor individually or collectively, may cause the electronic device to, based on identifying that the first stall ratio is less than or equal to the first threshold value, or based on identifying that the condition is not satisfied, operate based on a dynamic voltage and frequency scaling (DVFS) scheme.

According to an embodiment of the disclosure, the instructions, when executed by the processor individually or collectively, may cause the electronic device to, based on identifying that the third stall rate is greater than or equal to the second threshold value, perform the first operation.

According to an embodiment of the disclosure, a QoS-related value applied to a transaction may include a priority used for transferring the transaction to at least one additional circuit (217; 219) related to accessing the memory and/or a priority used for processing the transaction in the at least one additional circuit (217; 219).

According to an embodiment of the disclosure, the instructions, when executed by the processor individually or collectively, may cause the electronic device to, by adjusting the QoS-related value applied to the transaction of the processor to be higher than a QoS-related value applied to the at least one of the GPU or the multimedia block, transfer the transaction of the processor to the at least one additional circuit (217; 219) related to accessing the memory with priority over the transaction of at least one of the GPU or the multimedia block, or process the transaction of the processor with priority over the transaction of the at least one of the GPU or the multimedia block in the at least one additional circuit.

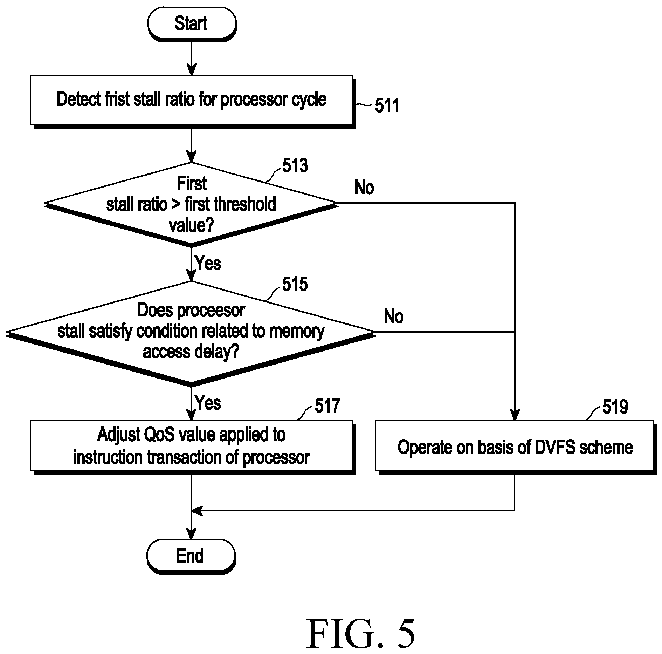

FIG. 5 is a flowchart illustrating an operating process of an electronic device according to an embodiment.

Referring to FIG. 5 , an electronic device (e.g., an electronic device 101 in FIG. 1) (e.g., an AP 200 in FIG. 2 or a CPU 211 in FIG. 2 or 3) may detect a first stall ratio for a processor cycle of a processor (e.g., the CPU 211 in FIG. 2 or 3) in operation 511. The processor cycle may represent a CPU cycle, and a scheme of detecting the stall ratio may be implemented to be similar to or substantially the same as that described in FIG. 2 or 3, so a detailed description thereof will be omitted herein.

The electronic device, which detects the first stall ratio of the processor, may identify whether the first stall ratio exceeds a first threshold value in operation 513. For example, the first threshold value may be a first threshold stall ratio. The first threshold value may be implemented to be similar to or substantially the same as that described in FIG. 2 or 3, so a detailed description thereof will be omitted herein.

If the first stall ratio exceeds the first threshold value (operation 513 - Yes), the electronic device may identify whether the processor stall of the processor is due to a memory access delay to memory (e.g., memory 130 in FIG. 1) in operation 515. In an embodiment, the processor stall may represent the "CPU stall," and it will be noted that the terms processor stall and CPU stall may be used interchangeably for convenience of the following description. The CPU stall may be similar to that described in FIGS. 2 to 4, so a detailed description thereof will be omitted herein. In an embodiment, the processor stall which occurs due to the memory access delay may be a memory bound stall. In an embodiment, the memory bound stall may be a stall which occurs due to the memory access delay (e.g., an access delay to an external memory of the processor (e.g., the CPU), such as DRAM).

If the processor stall is due to the memory access delay (operation 515 - Yes), the electronic device may adjust a QoS value applied to an instruction transaction of the processor in operation 517. In an embodiment, the electronic device may adjust the QoS value applied to the instruction transaction of the processor to be higher than a QoS value applied to an instruction transaction of a GPU.

After adjusting the QoS value applied to the instruction transaction of the processor, the electronic device may detect a second stall ratio for the processor cycle, identify whether the second stall ratio is less than a second threshold value, identify whether power budget room is greater than or equal to a third threshold value if it is identified that the second stall ratio is greater than or equal to the second threshold value or the first threshold value, and based on identifying that the power budget room is greater than or equal to the third threshold value, adjust an operating voltage and an operating frequency of at least one IP block (or circuit) (e.g., a GPU 213 in FIG. 2 or 3, a multimedia block 215 in FIG. 2 or 3, an interconnect block 217 in FIG. 2 or 3, and/or a memory controller 219 in FIG. 2 or 3). In FIG. 5, the at least one IP block (or circuit) has been described as including the CPU, the GPU, the multimedia block, the interconnect block, and/or the memory controller, but is not limited thereto, and may include various additional IP blocks such as an NPU. After adjusting the operating voltage and the operating frequency of the at least one IP block, the electronic device may detect a third stall ratio of the processor cycle, identify whether the third stall ratio is less than a second threshold, and, based on identifying that the third stall ratio is less than the second threshold, perform at least one of restoring the adjusted QoS value applied to the transaction of the at least one processor to a QoS value before the adjustment, or a second operation of restoring the adjusted operating voltage and operating frequency of the at least one processor or at least one IP block to an operating voltage and an operating frequency before the adjustment.

If the first stall ratio is less than or equal to the first threshold (Operation 513 - No), the electronic device may operate based on a DVFS scheme without QoS adjustment in operation 519 (for example, may maintain an operation mode in which it operates based on an existing DVFS scheme without QoS adjustment). If the processor stall is not the processor stall which occurs due to the memory access delay (Operation 515 - No), the electronic device may operate based on the DVFS scheme without QoS adjustment in operation 519 (for example, may maintain an operation mode in which it operates based on the existing DVFS scheme without QoS adjustment).

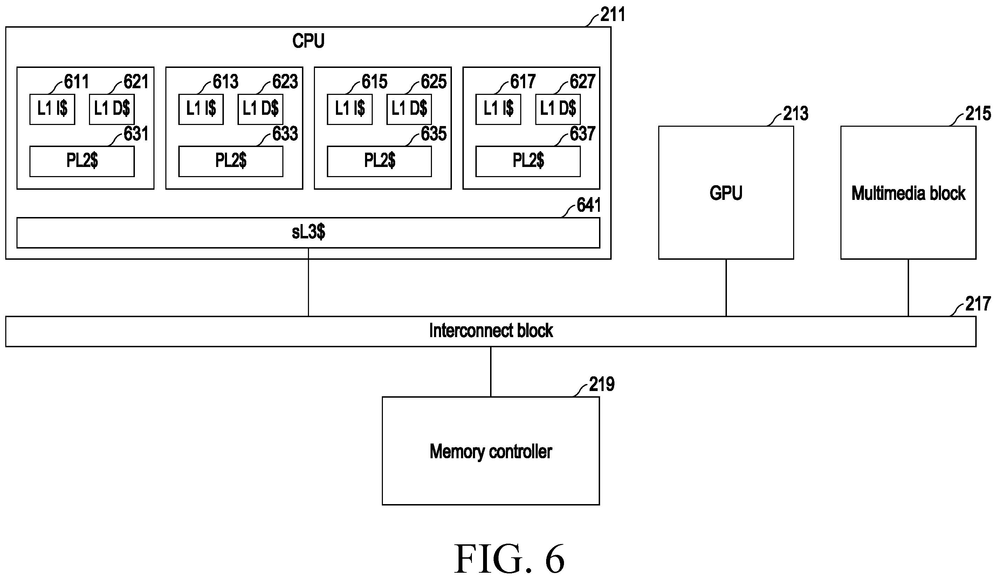

FIG. 6 is a diagram for describing a scheme for determining a stall ratio of a CPU cycles according to an embodiment.

Referring to FIG. 6, an AP 200 (e.g., an AP 200 in FIG. 2) may include a CPU 211 (e.g., a CPU 211 in FIG. 2 or 3), a GPU 213 (e.g., a GPU 213 in FIG. 2 or 3), a multimedia block 215 (e.g., a multimedia block 215 in FIG. 2), an interconnect block 217 (e.g., an interconnect block 217 in FIG. 2), and/or a memory controller 219 (e.g., a memory controller 219 in FIG. 2). The AP 200 may correspond to a processor 120 in FIG. 1. In an embodiment, the CPU 211 may be a processor. In FIG. 2, the memory controller 219 is described as an example, but the AP 200 may include an IP block capable of controlling not only DRAM but also memory. According to an embodiment, the AP 200 may be implemented in a form of an SoC.

According to an embodiment, the CPU 211 may collect and analyze information provided from a PMU. The CPU 211 may collect and analyze the information provided from the PMU at a set cycle (e.g., 1 second). The set cycle used for collecting and analyzing the information provided from the PMU may vary depending on a situation. The information provided from the PMU may be implemented to be similar to or substantially the same as that described in FIG. 3, so a detailed description thereof will be omitted herein.

According to an embodiment, the CPU 211 may detect a stall ratio (stall_ratio) of a CPU cycle based on the information provided from the PMU (e.g., an event provided from the PMU). In an embodiment, the stall ratio of the CPU cycle may represent a ratio occupied by a CPU stall interval to the CPU cycle. According to an embodiment, the stall ratio of the CPU cycle may be detected based on the information provided from the PMU for set time (e.g., 1 second). In an embodiment, the set time may represent optimal time required to detect an operating situation of the CPU to perform appropriate power control, and the set time for detecting the stall ratio of the CPU cycle may vary depending on a situation.

In an embodiment, the CPU 211 may identify whether the stall ratio of the CPU cycle exceeds a first threshold value (e.g., a first threshold stall ratio (stall_ratio_rise)) which is preset. If the stall ratio of the CPU cycle exceeds the first threshold value, the CPU 211 may identify whether the CPU stall is a CPU stall (e.g., a memory bound stall) which occurs due to a memory access delay (e.g., a DRAM access delay). If the CPU stall is not the CPU stall which occurs due to the DRAM access delay, the CPU 211 may identify whether the CPU stall is a CPU bound stall. According to an embodiment, the CPU 211 may identify whether the CPU stall is the memory bound stall or the CPU bound stall based on the information provided by the PMU.

According to an embodiment, the information provided from the PMU used for identifying whether the CPU stall is the memory bound stall may include STALL_FRONTEND_MEMBOUND and/or STALL_BACKEND_MEMBOUND. In an embodiment, STALL_FRONTEND_MEMBOUND may include a case in which a cache miss occurs in an operation of fetching an instruction. In an embodiment, STALL_BACKEND_MEMBOUND may include a case in which an access to memory (e.g., DRAM), which is an external resource, is required due to a cache miss which occurs during a read/write operation.

According to an embodiment, the information provided from the PMU used for identifying whether the CPU stall is the CPU bound stall may include STALL_FRONTEND_CPUBOUND and/or STALL_BACKEND_CPUBOUND. In an embodiment, STALL_BACKEND_CPUBOUND may include a case in which an instruction is not executed and a delay occurs due to a lack of resources of a CPU internal execution engine.

In an embodiment, STALL_FRONTEND_CPUBOUND may include a case in which a delay occurs due to a CPU pipeline flush operation due to a branch misprediction.

According to an embodiment, if the CPU 211 is capable of obtaining the information such as STALL_FRONTEND_MEMBOUND, STALL_BACKEND_MEMBOUND, STALL_FRONTEND_CPUBOUND, and/or STALL_BACKEND_CPUBOUND from the PMU, the CPU 211 may identify whether the CPU stall is the memory bound stall or the CPU bound stall.

If the information such as STALL_FRONTEND_MEMBOUND, STALL_BACKEND_MEMBOUND, STALL_FRONTEND_CPUBOUND, and/or STALL_BACKEND_CPUBOUND is not provided from the PMU, the CPU 211 may use at least one of a cache miss rate (e.g., L1 I$ miss rate and/or L1 D$ miss rate), a branch misprediction rate, and/or a TLB miss rate to identify whether the CPU stall is the memory bound stall or the CPU bound stall.

As described in Table 1, the branch misprediction rate may represent a ratio of a branch instruction which is performed with incorrect prediction to all branch instructions executed by the CPU 211, and may be determined as BR_MIS_PRED_RETIRED/BR_RETIRED. As the branch misprediction rate increases, the CPU bound stall may occur due to a pipeline flush operation caused by frequent misprediction. In an embodiment, the CPU 211 may identify that the CPU stall is the CPU bound stall if the branch misprediction rate exceeds a fourth threshold value.

As described in Table 1, the cache miss rate may represent a ratio of the number of cache accesses in which a miss occurs to the total number of cache accesses of the CPU 211, and may be determined as any one of L1I_CACHE_REFILL/L1I_CACHE, L1D_CACHE_REFILL/L1D_CACHE, L2D_CACHE_REFILL/L2D_CACHE, and/or L3D_CACHE_REFILL/L3D_CACHE. As described in Table 1, the TLB miss rate may represent a ratio of the number of TLB accesses in which a miss occurs to the total number of TLB accesses, and may be determined as any one of L1I_TLB_REFLL/L1I_TLB, L1D_TLB_REFILL/L1D_TLB, and/or L2D_TLB_REFILL/L2D_TLB.

The cache miss rate and/or the TLB miss rate may be related to an external memory (e.g., DRAM) access. In an embodiment, the CPU 211 may identify that the CPU stall is the memory bound stall if the cache miss rate exceeds a fifth threshold value. In an embodiment, the CPU 211 may identify that the CPU stall is the memory bound stall if the TLB miss rate exceeds the sixth threshold value.

In an embodiment, the CPU 211 may identify whether the CPU stall is the memory bound stall based on a miss rate of a cache level connected to the interconnect block 217. In an embodiment, if a shared L2 cache is the last level cache within a CPU cluster, an L2$ miss rate may be a miss rate of a cache level, and the CPU 211 may identify whether the CPU stall is the memory bound stall based on the L2$ miss rate. The CPU 211 may identify that the CPU stall is the memory bound stall if the L2$ miss rate exceeds the fifth threshold value. In an embodiment, when if a shared L3 cache (a shared L2 cache) is the last level cache within the CPU cluster, an L3$ miss rate may be the miss rate of the cache level, and the CPU 211 may identify whether the CPU stall is the memory bound stall based on the L3$ miss rate. The CPU 211 may identify that the CPU stall is the memory bound stall if the L3$ miss rate exceeds the fifth threshold value.

As illustrated in FIG. 6, the CPU 211 may include a plurality of L1 instruction caches (I$s) 611, 613, 615, 617, a plurality of L1 data caches (D$s) 621, 623, 625, 627, a plurality of L2 caches 631, 633, 635, 637, and/or an L3 cache 641. In this case, the CPU 211 may identify whether the CPU stall is the memory bound stall based on an L3$ miss rate for an L3 cache 641. In an embodiment, the fifth threshold value used for identifying whether the CPU stall is the memory bound stall may be changed based on various parameters such as a cache size.

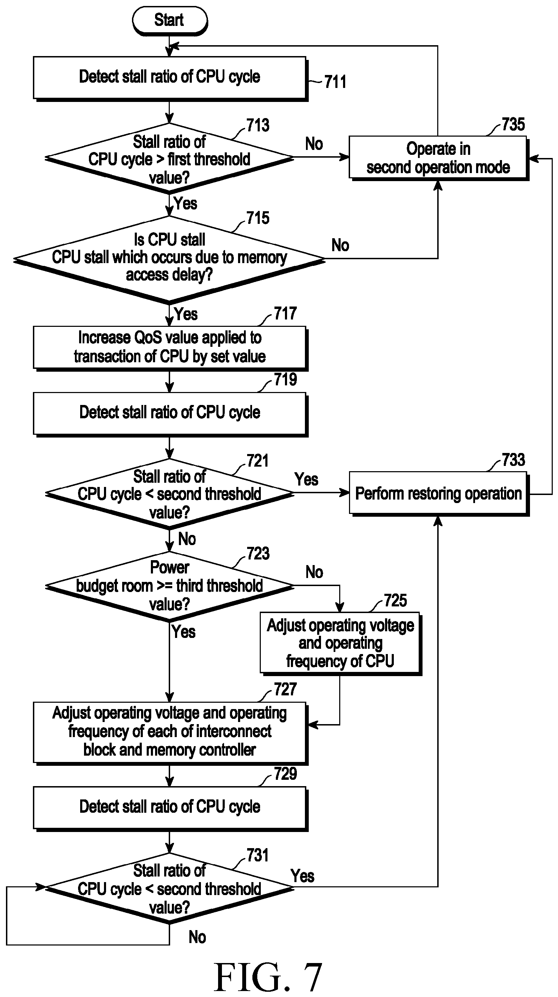

FIG. 7 is a flowchart illustrating an operating method of an electronic device according to an embodiment.

Referring to FIG. 7, an electronic device (e.g., an electronic device 101 in FIG. 1) (e.g., an AP 200 in FIG. 2 or 6, or a CPU 211 in FIG. 2, 3, or 6) may detect a stall ratio of a CPU cycle based on information provided from a PMU (e.g., an event provided from the PMU) in operation 711. In an embodiment, the electronic device may collect and analyze information provided from the PMU at a set cycle (e.g., 1 second) to detect the stall ratio of the CPU cycle. The set cycle used for collecting and analyzing the information provided from the PMU may vary depending on a situation. The information provided from the PMU may be implemented to be similar to or substantially the same as that described in FIG. 3, so a detailed description thereof will be omitted herein. An operation of determining the stall ratio of the CPU cycle may be implemented to be similar to or substantially the same as that described in FIG. 3, so a detailed description thereof will be omitted herein.

The electronic device, which detects the stall ratio of the CPU cycle, may, in operation 713, identify whether the detected stall ratio of the CPU cycle exceeds a preset first threshold value (e.g., a first threshold stall ratio (stall_ratio_rise)). The first threshold value may be implemented to be similar to or the same as that described in FIG. 2, 3, or 5, so a detailed description thereof will be omitted herein.

If the stall ratio of the CPU cycle exceeds the first threshold value (Operation 713 - Yes), the electronic device may identify whether the CPU stall is a CPU stall which occurs due to a memory access delay (e.g., a DRAM access delay) in operation 715. An operation of determining whether the CPU stall is the CPU stall which occurs due to the memory access delay may be implemented to be similar to or substantially the same as that described in FIG. 3, so a detailed description thereof will be omitted herein.

If the CPU stall is the CPU stall which occurs due to the memory access delay (Operation 715 - Yes), the electronic device may increase a QoS value applied to transactions of a CPU by a set value (e.g., 1) in operation 717. In an embodiment, it will be described assuming that a larger QoS value for a transaction is a higher priority, however, alternatively, a smaller QoS value for a transaction may be a higher priority.

The electronic device, which increases the QoS value applied to the transactions of the CPU by the set value, may detect a stall ratio of a CPU cycle based on information provided from a PMU in operation 719. An operation of detecting the stall ratio of the CPU cycle may be implemented to be similar to or substantially the same as operation 711, so a detailed description thereof will be omitted herein.

The electronic device, which detects the stall ratio of the CPU cycle, may, in operation 721, identify whether the detected stall ratio of the CPU cycle (e.g., the stall ratio of the CPU cycle detected after increasing the QoS value applied to the transactions of the CPU by the set value) is less than a preset second threshold value (e.g., a second threshold stall ratio (stall_ratio_fall)). The second threshold value may be implemented to be similar to or the same as that described in FIG. 2, 3, or 5, so a detailed description thereof will be omitted herein.

If the stall ratio of the CPU cycle is less than the second threshold value (Operation 721 - Yes), the electronic device may perform a restoring operation in operation 733. In an embodiment, the restoring operation may include an operation of restoring the QoS values applied to the transactions of the CPU to an original value (e.g., a value reduced by a set value). The electronic device, which restores the QoS value applied to the transactions of the CPU to the original value, may operate in a second operation mode in operation 735 and return to operation 711. In an embodiment, the second operation mode may be an operation mode based on a typical DVFS scheme.

If the stall ratio of the CPU cycle is greater than or equal to the second threshold value or the first threshold value (Operation 721 - No), the electronic device may identify whether power budget room is greater than or equal to a preset third threshold value in operation 723. In an embodiment, if the power budget room is greater than or equal to the third threshold value, this may indicate that available power is relatively sufficient. The third threshold value may be implemented to be similar to or the same as that described in FIG. 2, 3, or 5, so a detailed description thereof will be omitted herein.

If the power budget room is greater than or equal to the third threshold value (Operation 723 - Yes), the electronic device may adjust an operating voltage and an operating frequency of each of an interconnect block (e.g., an interconnect block 217 in FIG. 2 or 6) and a memory controller (e.g., a memory controller 219 in FIG. 2 or 6) in operation 727. In FIG. 7, a case of adjusting the operating voltage and the operating frequency of each of the interconnect block and the memory controller will be described as an example, however, operation 727 may be applicable to at least one of IP blocks related to the CPU as well as the interconnect block and the memory controller. According to an embodiment, the electronic device may adjust the operating voltage and the operating frequency of each of the interconnect block and the memory controller by increasing the operating voltage of each of the interconnect block and the memory controller by set voltage, and by increasing the operating frequency of each of the interconnect block and the memory controller by a set frequency. If the power budget room is greater than or equal to the third threshold value, the electronic device may maintain an operating voltage and an operating frequency of the CPU in operation 727.

If the power budget room is less than the third threshold value (Operation 723-No), the electronic device may adjust the operating voltage and the operating frequency of the CPU in operation 725. In an embodiment, the electronic device may adjust the operating voltage and the operating frequency of the CPU by decreasing the operating voltage of the CPU by set voltage and by decreasing the operating frequency of the CPU by a set frequency in operation 725. The electronic device, which adjusts the operating voltage and the operating frequency of the CPU, may proceed to operation 727 to adjust the operating voltage and the operating frequency of each of the interconnect block and the memory controller.

After adjusting the operating voltage and the operating frequency of each of the interconnect block and the memory controller, the electronic device may detect a stall ratio of a CPU cycle based on information provided from the PMU in operation 729. The operation of detecting the stall ratio of the CPU cycle may be implemented to be similar to or substantially the same as operation 711, so a detailed description thereof will be omitted herein.

The electronic device, which detects the stall ratio of the CPU cycle, may, in operation 731, identify whether the detected stall ratio of the CPU cycle is less than a second threshold value. If the stall ratio of the CPU cycle detected after adjusting the operating voltage and the operating frequency of each of the interconnect block and the memory controller is less than the second threshold value (Operation 731 - Yes), the electronic device may proceed to operation 733 to perform a restoring operation. According to an embodiment, the restoring operation may include an operation of restoring the QoS value applied to the transactions of the CPU to an original value (e.g., a value reduced by the set value), and restoring the operating voltage and the operating frequency of each of the interconnect block and the memory controller, and the operating voltage and the operating frequency of the CPU to an original operating voltage and an original operating frequency. In an embodiment, the electronic device may decrease the operating voltage of each of the interconnect block and the memory controller by the set voltage, and decrease the operating frequency of each of the interconnect block and the memory controller by the set frequency, thereby restoring the operating voltage and the operating frequency of each of the interconnect block and the memory controller to the original operating voltage and operating frequency. According to an embodiment, the restoring operation may restore the QoS value applied to the transactions of the CPU to the original value (e.g., the value reduced by the set value), restore the operating voltage and operating frequency of each of the interconnect block and the memory controller to the original operating voltage and operating frequency, and restore the operating voltage and operating frequency of the CPU to the original operating voltage and operating frequency. In an embodiment, the electronic device may increase the operating voltage of the CPU by the set voltage, and increase the operating frequency of the CPU by the set frequency, thereby restoring the operating voltage and operating frequency of the CPU to the original operating voltage and operating frequency.

If the stall ratio of the CPU cycle detected after adjusting the operating voltage and the operating frequency of each of the interconnect block and the memory controller is greater than or equal to the second threshold value (Operation 731 - No), the electronic device may return to operation 729.

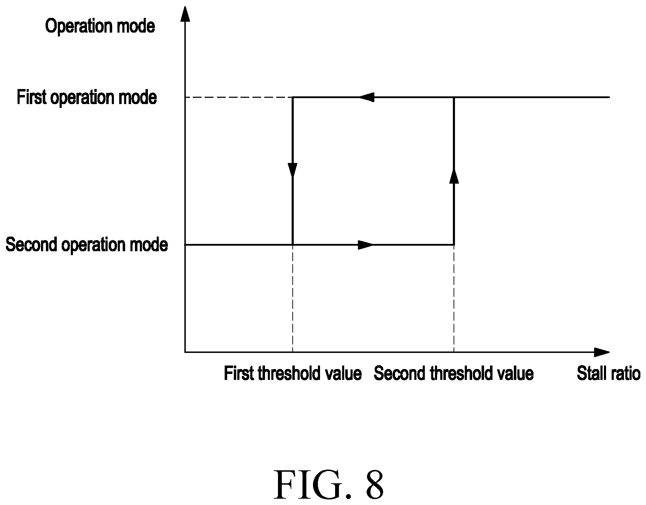

FIG. 8 is a diagram for describing a scheme for determining threshold values used for controlling power based on a stall ratio of a CPU cycle, according to an embodiment.

Referring to FIG. 8, threshold values used for controlling (for example, adjusting) a QoS value for a CPU transaction and/or for controlling (for example, adjusting) operating voltages and operating frequencies for a CPU (e.g., a CPU 211 in FIG. 2, 3, or 6) and IP blocks related to the CPU may include a first threshold value (e.g., a first threshold stall ratio (stall_ratio_rise)) and/or a second threshold value (e.g., a second threshold stall ratio (stall_ratio_fall)). The first threshold value and the second threshold value may be implemented to be similar to or the same as those described in FIG. 2, 3, 5, or 7, so a detailed description thereof will be omitted herein.

In FIG. 8, a vertical axis may represent an operation mode, and a horizontal axis may represent a stall ratio of a CPU cycle. In FIG. 8, a first operation mode may be an operation mode which controls a QoS, an operation voltage, and/or an operation frequency based on the stall ratio of the CPU cycle proposed in an embodiment of the disclosure, and the second operation mode may be an operation mode which operates based on a general DVFS scheme. The first threshold value and the second threshold value may be applied in the first operation mode, and the first threshold value, the second threshold value, and/or the first operation mode may be implemented to be similar to or the same as those described in FIGS. 2 to 7, so a detailed description thereof will be omitted herein.

According to an embodiment, if the CPU sets the first threshold value and/or the second threshold value, the CPU may prevent (for example, reduce or minimize) a ping-pong phenomenon from occurring if the CPU operates based on the first operation mode by applying hysteresis as illustrated in FIG. 8. In an embodiment, the first operation mode may be applied if the stall ratio of the CPU cycle exceeds the first threshold value, and the first threshold value may be set to, for example, a first value (e.g., 50%). In an embodiment, the second operation mode may be applied (for example, it may transit from the first operation mode to the second operation mode) if the stall ratio of the CPU cycle is less than the second threshold value, and the second threshold value may be set to, for example, a second value (e.g., 30%). In this way, if the first threshold value is set to 50% and the second threshold value is set to 30%, the CPU may be guaranteed to stably operate in the first operation mode or the second operation mode while the stall ratio of the CPU cycle fluctuates within a range of 30% ~ 50%.

According to an embodiment of the disclosure, if a CPU stall occurs, it is possible to control (for example, adjust) a QoS of a CPU based on information provided from a PMU (e.g., various events provided from the PMU), or to control (for example, adjust) an operating voltage and an operating frequency of IP blocks CPU (e.g., an interconnect block and/or a DRAM controller) related to the, thereby escaping from stall situation of the CPU more quickly. This may contribute to improving unnecessary current consumption and increasing (for example, maximizing) usage time of an electronic device.

According to an embodiment of the disclosure, a method of an electronic device (101) may comprise detecting a first stall ratio for a processor cycle of a processor (120; 200; 211) including processing circuitry.

According to an embodiment of the disclosure, the method may comprise identifying whether the first stall ratio exceeds a first threshold value.

According to an embodiment of the disclosure, the method may comprise, based on identifying that the first stall ratio exceeds the first threshold value, identifying whether to satisfy a condition that processor stall of the processor is related to a memory access delay to memory (130).

According to an embodiment of the disclosure, the method may comprise, based on identifying that the condition is satisfied, adjusting a quality of service (QoS)-related value applied to a transaction of the processor to be higher than a QoS-related value applied to a transaction of the at least one of a graphic processing unit (GPU)(213) or a multimedia block (215).

According to an embodiment of the disclosure, the condition may include at least one of a condition that a cache miss occurs while the processor performs an operation to fetch an instruction from a cache, a condition that an access to the memory is required due to a cache miss that occurs while the processor performs a reading/writing operation on the cache, or a condition that a miss rate of the cache exceeds a threshold miss rate.

According to an embodiment of the disclosure, the method may comprise detecting a second stall ratio for the processor cycle after adjusting the QoS-related value applied to the transaction of the processor.

According to an embodiment of the disclosure, the method may comprise identifying whether the second stall ratio is less than a second threshold value.

According to an embodiment of the disclosure, the method may comprise, based on identifying that the second stall ratio is greater than or equal to the second threshold value, identifying whether power budget room is greater than or equal to a third threshold value.

According to an embodiment of the disclosure, the method may comprise, based on identifying that the power budget room is greater than or equal to the third threshold value, increasing an operating voltage and an operating frequency of at least one additional circuit (217; 219).

According to an embodiment of the disclosure, adjusting the operating voltage and the operating frequency of the at least one additional circuit may comprise increasing the operating voltage of the at least one additional circuit by a set voltage, and increasing the operating frequency of the at least one additional circuit by a set frequency.

According to an embodiment of the disclosure, the method may comprise, based on identifying that the power budget room is less than the third threshold value, decreasing an operating voltage and an operating frequency of the at least one processor.

According to an embodiment of the disclosure, the method may comprise increasing the operating voltage and the operating frequency of the at least one additional circuit.

According to an embodiment of the disclosure, the method may comprise detecting a third stall ratio for the processor cycle after increasing the operating voltage and the operating frequency of the at least one additional circuit.

According to an embodiment of the disclosure, the method may comprise identifying whether the third stall ratio is less than the second threshold value.

According to an embodiment of the disclosure, the method may comprise, based on identifying that the third stall ratio is less than the second threshold, perform at least one of a first operation of restoring the adjusted QoS-related value applied to the transaction of the processor to the QoS-related value before the adjustment, or a second operation of restoring the operating voltage and the operating frequency of the processor to the operating voltage and the operating frequency before the decrease or restoring the operating voltage and the operating frequency of the at least one additional circuit to the operating voltage and the operating frequency before the increase.

According to an embodiment of the disclosure, the method may comprise operating based on a dynamic voltage and frequency scaling (DVFS) scheme after performing the at least one of the first operation or the second operation.

According to an embodiment of the disclosure, the method may comprise, based on identifying that the first stall ratio is less than or equal to the first threshold value, or based on identifying that the processor stall does not satisfy the condition, operating based on a dynamic voltage and frequency scaling (DVFS) scheme.

According to an embodiment of the disclosure, the method may comprise, based on identifying that the third stall rate is greater than or equal to the second threshold value, performing the first operation.

According to an embodiment of the disclosure, a QoS-related value applied to a transaction may include a priority used for transferring the transaction to at least one additional circuit (217; 219) related to accessing the memory and/or a priority used for processing the transaction in the at least one additional circuit (217; 219).

According to an embodiment of the disclosure, by adjusting the QoS-related value applied to the transaction of the processor to be higher than a QoS-related value applied to the at least one of the GPU or the multimedia block, the transaction of the processor may be transferred to the at least one additional circuit (217; 219) related to accessing the memory with priority over the transaction of at least one of the GPU or the multimedia block, or the transaction of the processor may be processed with priority over the transaction of the at least one of the GPU or the multimedia block in the at least one additional circuit.

According to an embodiment of the disclosure, a medium storing at least one instruction and data readable by a computer may be provided.

According to an embodiment of the disclosure, the at least one instruction or the data, when executed by a processor (120; 200; 211) including processing circuitry of an electronic device (101), may cause the electronic device to perform at least one operation.

According to an embodiment of the disclosure, the at least one operation may comprise detecting a first stall ratio for a processor cycle of the processor.

According to an embodiment of the disclosure, the at least one operation may comprise identifying whether the first stall ratio exceeds a first threshold value.

According to an embodiment of the disclosure, the at least one operation may comprise, based on identifying that the first stall ratio exceeds the first threshold value, identifying whether to satisfy a condition that processor stall of the processor is related to a memory access delay to memory (130).

According to an embodiment of the disclosure, the at least one operation may comprise, based on identifying that the processor stall is due to the memory access delay, adjusting a quality of service (QoS)-related value applied to a transaction of the processor to be higher than a QoS-related value applied to a transaction of the at least one of a graphic processing unit (GPU)(213) or a multimedia block (215).

According to an embodiment of the disclosure, the condition may include at least one of a condition that a cache miss occurs while the processor performs an operation to fetch an instruction from a cache, a condition that an access to the memory is required due to a cache miss that occurs while the processor performs a reading/writing operation on the cache, or a condition that a miss rate of the cache exceeds a threshold miss rate.

The technical challenges intended to be achieved in this document are not limited to the technical challenges mentioned above, and other technical challenges not mentioned will be clearly understood by those of ordinary skill in the field of technology belonging to this document from a description below.

The effects obtained from the disclosure are not limited to the effects mentioned above, and other effects not mentioned will be clearly understood by those of ordinary skill in the field of technology belonging to this document from a description below.

## Claims

1. An electronic device (101), comprising:
at least one of a graphic processing unit (GPU)(213) or a multimedia block (215);
a processor (120; 200; 211) including processing circuitry; and
memory (130) storing instructions that, when executed by the processor individually or collectively, cause the electronic device to:
detect a first stall ratio for a processor cycle of the processor,
identify whether the first stall ratio exceeds a first threshold value,
based on identifying that the first stall ratio exceeds the first threshold value, identify whether to satisfy a condition that processor stall of the processor is related to a memory access delay to the memory, and
based on identifying that the condition is satisfied, adjust a quality of service (QoS)-related value applied to a transaction of the processor to be higher than a QoS-related value applied to a transaction of the at least one of the GPU or the multimedia block.

2. The electronic device of claim 1, wherein the condition includes at least one of a condition that a cache miss occurs while the processor performs an operation to fetch an instruction from a cache, a condition that an access to the memory is required due to a cache miss that occurs while the processor performs a reading/writing operation on the cache, or a condition that a miss rate of the cache exceeds a threshold miss rate.

3. The electronic device of claim 1 or 2, comprising:
at least one additional circuit (217; 219) related to accessing the memory,
wherein the instructions, when executed by the processor individually or collectively, cause the electronic device to:
detect a second stall ratio for the processor cycle after adjusting the QoS-related value applied to the transaction of the processor,
identify whether the second stall ratio is less than a second threshold value,
based on identifying that the second stall ratio is greater than or equal to the second threshold value, identify whether power budget room is greater than or equal to a third threshold value, and
based on identifying that the power budget room is greater than or equal to the third threshold value, increase an operating voltage and an operating frequency of the at least one additional circuit.

4. The electronic device of claim 3,
wherein the instructions, when executed by the processor individually or collectively, cause the electronic device to:
increase the operating voltage of the at least one additional circuit by a set voltage, and increase the operating frequency of the at least one additional circuit by a set frequency.

5. The electronic device of claim 3,
wherein the instructions, when executed by the processor individually or collectively, cause the electronic device to:
based on identifying that the power budget room is less than the third threshold value, decrease an operating voltage and an operating frequency of the at least one processor, and
increase the operating voltage and the operating frequency of the at least one additional circuit.

6. The electronic device of any one of claims 3 to 5, wherein the instructions, when executed by the processor individually or collectively, cause the electronic device to:
detect a third stall ratio for the processor cycle after increasing the operating voltage and the operating frequency of the at least one additional circuit,
identify whether the third stall ratio is less than the second threshold value, and
based on identifying that the third stall ratio is less than the second threshold, perform at least one of a first operation of restoring the adjusted QoS-related value applied to the transaction of the processor to the QoS-related value before the adjustment, or a second operation of restoring the operating voltage and the operating frequency of the processor to the operating voltage and the operating frequency before the decrease or restoring the operating voltage and the operating frequency of the at least one additional circuit to the operating voltage and the operating frequency before the increase.

7. The electronic device of claim 6,
wherein the instructions, when executed by the processor individually or collectively, cause the electronic device to:
operate based on a dynamic voltage and frequency scaling (DVFS) scheme after performing the at least one of the first operation or the second operation.

8. The electronic device of any one of claims 1 to 7,
wherein the instructions, when executed by the processor individually or collectively, cause the electronic device to:
based on identifying that the first stall ratio is less than or equal to the first threshold value, or based on identifying that the condition is not satisfied, operate based on a dynamic voltage and frequency scaling (DVFS) scheme.

9. The electronic device of claim 6,
wherein the instructions, when executed by the processor individually or collectively, cause the electronic device to:
based on identifying that the third stall rate is greater than or equal to the second threshold value, perform the first operation.

10. The electronic device of claim 1, wherein a QoS-related value applied to a transaction includes a priority used for transferring the transaction to at least one additional circuit (217; 219) related to accessing the memory and/or a priority used for processing the transaction in the at least one additional circuit (217; 219), and
wherein the instructions, when executed by the processor individually or collectively, cause the electronic device to:
by adjusting the QoS-related value applied to the transaction of the processor to be higher than a QoS-related value applied to the at least one of the GPU or the multimedia block, transfer the transaction of the processor to the at least one additional circuit (217; 219) related to accessing the memory with priority over the transaction of at least one of the GPU or the multimedia block, or process the transaction of the processor with priority over the transaction of the at least one of the GPU or the multimedia block in the at least one additional circuit.

11. A method of an electronic device (101), the method comprising:
detecting a first stall ratio for a processor cycle of a processor (120; 200; 211) including processing circuitry;
identifying whether the first stall ratio exceeds a first threshold value;
based on identifying that the first stall ratio exceeds the first threshold value, identifying whether to satisfy a condition that processor stall of the processor is related to a memory access delay to memory (130); and
based on identifying that the condition is satisfied, adjusting a quality of service (QoS)-related value applied to a transaction of the processor to be higher than a QoS-related value applied to a transaction of the at least one of a graphic processing unit (GPU)(213) or a multimedia block (215).

12. The method of claim 11, wherein the condition includes at least one of a condition that a cache miss occurs while the processor performs an operation to fetch an instruction from a cache, a condition that an access to the memory is required due to a cache miss that occurs while the processor performs a reading/writing operation on the cache, or a condition that a miss rate of the cache exceeds a threshold miss rate.

13. The method of claim 11 or 12, further comprising:
detecting a second stall ratio for the processor cycle after adjusting the QoS-related value applied to the transaction of the processor;
identifying whether the second stall ratio is less than a second threshold value;
based on identifying that the second stall ratio is greater than or equal to the second threshold value, identifying whether power budget room is greater than or equal to a third threshold value; and
based on identifying that the power budget room is greater than or equal to the third threshold value, increasing an operating voltage and an operating frequency of at least one additional circuit (217; 219).

14. The method of claim 11, wherein a QoS-related value applied to a transaction includes a priority used for transferring the transaction to at least one additional circuit (217; 219) related to accessing the memory and/or a priority used for processing the transaction in the at least one additional circuit (217; 219), and
wherein the transaction of the processor is transferred to the at least one additional circuit (217; 219) related to accessing the memory with priority over the transaction of at least one of the GPU or the multimedia block by adjusting the QoS-related value applied to the transaction of the processor to be higher than a QoS-related value applied to the at least one of the GPU or the multimedia block, or the transaction of the processor is processed with priority over the transaction of the at least one of the GPU or the multimedia block in the at least one additional circuit.

15. A medium storing at least one instruction and data readable by a computer, wherein the at least one instruction or the data, when executed by a processor (120; 200; 211) including processing circuitry of an electronic device (101), causes the electronic device to perform at least one operation,
wherein the at least one operation comprises:
detecting a first stall ratio for a processor cycle of the processor;
identifying whether the first stall ratio exceeds a first threshold value;
based on identifying that the first stall ratio exceeds the first threshold value, identifying whether to satisfy a condition that processor stall of the processor is related to a memory access delay to memory (130); and
based on identifying that the processor stall is due to the memory access delay, adjusting a quality of service (QoS)-related value applied to a transaction of the processor to be higher than a QoS-related value applied to a transaction of the at least one of a graphic processing unit (GPU)(213) or a multimedia block (215).
